(19) Europäisches Patentamt
European Patent Office
Office européen des brevets

(11) EP 2 673 599 B1

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(51) Int Cl.:
*G01G 3/142* (2006.01)   *G01L 1/22* (2006.01)
*G01R 17/12* (2006.01)   *H03M 1/18* (2006.01)

(21) Anmeldenummer: **12708648.6**

(22) Anmeldetag: **09.02.2012**

(86) Internationale Anmeldenummer:
**PCT/DE2012/200006**

(87) Internationale Veröffentlichungsnummer:
**WO 2012/107040 (16.08.2012 Gazette 2012/33)**

(54) **VORRICHTUNG UND VERFAHREN ZUR SIGNALAUSWERTUNG VON WÄGEZELLEN MIT DEHNMESSSTREIFEN**

DEVICE AND METHOD FOR EVALUATING SIGNALS OF LOAD CELLS WITH STRAIN GAUGES

DISPOSITIF ET PROCÉDÉ D'ÉVALUATION DE SIGNAUX DE CELLULES DE PESAGE POURVUES D'UN EXTENSOMÈTRE À RÉSISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2011 DE 102011010945**
**11.03.2011 DE 102011013658**

(43) Veröffentlichungstag der Anmeldung:
**18.12.2013 Patentblatt 2013/51**

(73) Patentinhaber: **Panasonic Industrial Devices Europe Gmbh**
**21337 Lüneburg (DE)**

(72) Erfinder: **ZEISKE, Karsten**
**29223 Celle (DE)**

(74) Vertreter: **Stüven, Ralf**
**Pohl & Partner**
**Patentanwälte**
**Kirchenhang 32 b**
**21073 Hamburg (DE)**

(56) Entgegenhaltungen:
**GB-A- 1 478 156   US-A- 4 763 739**

**Beschreibung**

Die Erfindung betrifft eine Vorrichtung und ein Verfahren zur Signalauswertung von Wägezellen mit Dehnmessstreifen.

Moderne elektromechanische Waagen arbeiten zumeist entweder nach dem Prinzip der elektromagnetischen Kraftkompensation oder mit Wägezellen, die mit Dehnmessstreifen (DMS) arbeiten. Diese ändern schon bei geringen Verformungen ihren elektrischen Widerstand. Man klebt sie mit Spezialkleber auf Bauteile, die sich unter Belastung minimal verformen. Mit DMS können Waagen aller Größenordnungen, von Haushaltswaagen bis hin zu Kranwaagen, realisiert werden. So beschreibt z. B. DE 3538178 A1 eine Personenwaage für das Körpergewicht. DE 10135238 A1 beschreibt eine Waage für Lebensmittel und DE 102008014838 B3 eine Dosiermengenüberwachungsvorrichtung für Kaffeemaschinen. Diese arbeitet wie die in DE 19838371 C2 beschriebenen Waagen mit einer oder mehreren Wägezellen. Bei dem Einsatz mehrerer Wägezellen werden ihre Signale in einer Signalverarbeitungsvorrichtung addiert. Die Wägezellen sind als Blattfedern ausgeführt, auf die die DMS aufgeklebt sind.

DE 20023524 U1 beschreibt ein Kraftmesselement für eine Waage, das aus einem Balken besteht, der zwei Ausnahmen aufweist. Durch die verringerten Querschnitte entstehen zwei Biegestellen, zwischen denen sich bei Belastung der Enden des Balkens eine Parallelführung ergibt. Das Messsignal des Kraftmesselements wird aus einem DMS abgeleitet, der auf der Oberseite des Balkens aufgeklebt ist. Vier von diesen Kraftmesselementen, die als Wheatston'sche Brücke geschaltet sind, bilden die Wägezellen der Waage.

Bei Belastung werden die DMS gestreckt oder gestaucht, wobei sich deren elektrischer Widerstand ändert. Dadurch verändert sich der Spannungszustand im Nullzweig der Brückenschaltung, der verstärkt und mit z.B. einem Zeigerinstrument angezeigt wird. Neben dieser rein analogen Anzeige wird, wie z.B. in DE 102008014838 B3 beschrieben, der verstärkte Spannungszustand auch in einem Analog/Digital-Umsetzer (ADC) digitalisiert, mit einer digitalen Signalverarbeitung aufbereitet und mit einer Signalausgabe angezeigt.

Nachteilig an den beschriebenen Waagen ist, dass aufgrund des kleinen Ausgangssignals der Wägezellen, das typischerweise bei 2 mV pro Volt Speisespannung liegt, hochwertige und damit teure Verstärkerschaltungen eingesetzt werden müssen. Alternativ können auch bei Digitalisierung des Signals ADCs mit einer sehr hohen Auflösung verwendet werden. Aber auch diese stehen im Low-cost-Segment nicht zur Verfügung.

Die US 4,763,739A offenbart im Wesentlichen eine energieeffiziente Waage mit Dehnmessstreifen, die mit drei verschiedenen Betriebsströmen betrieben wird. Der höchste Strom dient dabei zum präzisen Wiegen, der mittlere Strom dient zur Indikation, ob ein Gewicht auf der Waage liegt, während der niedrigste Strom zur elektrischen Balancierung der Dehnmessstreifen vorgesehen ist. Im Standby-Betrieb wechselt die Waage regelmäßig zwischen dem niedrigen und dem mittleren Betriebsstrom. Wenn während der Phase mittleren Betriebsstroms ein Gewicht auf der Waage erkannt wird, wechselt die Waage in den höchsten Betriebsstrom. Das mit dem Dehnmessstreifen erzeugte Signal wird dann verstärkt und digitalisiert, wobei die Referenzspannung für den Analog/Digital-Wandler aus dem Strom durch den Dehnmessstreifen abgeleitet wird.

Die GB 1 478 156A betrifft im Wesentlichen eine Vorrichtung, mit der ein digitales Signal erzeugt wird, wenn eine Widerstands-Messbrücke unbalanciert ist. Zu diesem Zweck wird an den Eingang der Brücke während einer ersten Phase eine Spannung mit einer ersten Polarität und während einer zweiten Phase eine Spannung mit einer dazu entgegen gesetzten zweiten Polarität angelegt, wobei deren Beträge gleich sind. Die resultierenden Signale am Ausgang der Brücke werden digitalisiert und in der Weise miteinander kombiniert, dass äußere Einflüsse unberücksichtigt bleiben, so dass das kombinierte Signal mit dem unbalancierten Zustand der Brücke korrespondiert. Die Referenzen für die beiden Analog/Digital-Wandler werden dabei aus den Betriebsspannungen der Brücke abgeleitet.

Der Erfindung liegt die Aufgabe zugrunde, mit kostengünstigen Komponenten eine hochauflösende Wägezellenauswertung zu realisieren.

Erfindungsgemäß wird diese Aufgabe durch eine Vorrichtung mit den Merkmalen des Patentanspruchs 1 und ein Verfahren mit den Merkmalen des Patentanspruchs 9 gelöst, indem bei zwei aufeinander folgenden Messungen zwei unterschiedliche Arbeitspunkte des DMS eingestellt werden. Die Spannung im Nullzweig der Brückenschaltung des DMS wird in einem Differenzverstärker verstärkt und mit einem ADC digitalisiert. Dabei werden für den ADC und zur Einstellung des Arbeitspunktes des DMS dieselben Spannungsreferenzen genutzt. In einem Rechenwerk wird aus den beiden Messwerten der digitalisierte Offset und der Ausgangswert der Wägezelle ermittelt.

Die mit der Erfindung erzielten Vorteile bestehen insbesondere darin, dass die temperaturabhängigen Offsetspannungen von einfachen Operationsverstärkern kompensiert werden. Zur Steigerung der Flexibilität können eine oder mehrere Wägezellen verwendet werden.

Weitere Einzelheiten der Erfindung werden anhand der Figuren beschrieben:

Figur 1 zeigt schematisch den Aufbau der Auswerteschaltung inklusive Wägezelle.

Figur 2 zeigt schematisch eine vorteilhafte Weiterbildung der Erfindung.

Figur 3 zeigt eine Abwandlung der Erfindung.

Figur 4 zeigt schematisch eine weitere vorteilhafte Weiterbildung der Erfindung.

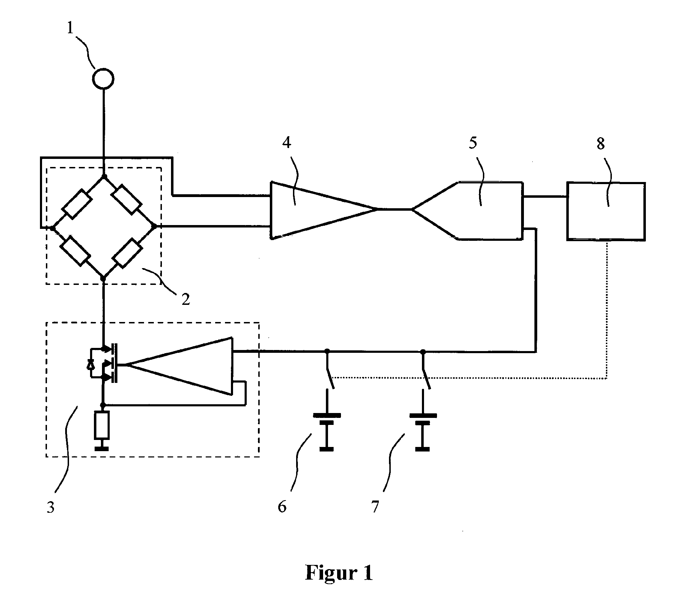

In Figur 1 ist schematisch der Aufbau der Auswerteschaltung inklusive Wägezelle gezeigt. Die Betriebsspannung wird aus einem DC-Bus 1 entnommen, an dem eine Wägezelle mit einem Dehnmessstreifen (DMS) 2 angeschlossen ist. Der DMS 2 ist als Wheatston'sche Brücke geschaltet. Der Strom I durch den DMS 2 wird durch eine Stromquelle 3 geregelt. Die dehnungsbedingte Widerstandsänderung $\Delta R$ des DMS 2 ist proportional zur Elongation $\varepsilon$ mit der Proportionalitätskonstanten k und dem Gesamtwiderstand der Brücke R:

$$\frac{\Delta R}{R} = \frac{\Delta U}{I \cdot R} = k \cdot \varepsilon \tag{1}$$

Die Spannung $\Delta U$ im Nullzweig der Brückenschaltung wird in einem Differenzverstärker 4 um den Faktor A verstärkt und mit einem Analog/Digital-Umsetzer (ADC) 5 digitalisiert. Dabei werden für den ADC 5 und die Stromquelle 3 dieselbe Spannungsreferenz 6 und 7 genutzt. Der Strom I wird daher durch den Referenzwiderstand $R_I$ und die Spannungsreferenz $U_{ref}$ bestimmt.

$$I = \frac{U_{ref}}{R_I} \tag{2}$$

Neben dem dehnungsbedingten Signal $\Delta U$ werden in dem Differenzverstärker 4 aber auch Off-set-Spannungen $U_{offset}$ aufgrund von Ungleichgewichten im Differenzverstärker 4 oder z.B. von Thermospannungen an Verbindungsstellen verstärkt. Somit ergibt sich für die Eingangsspannung am ADC 5:

$$U_{ADC} = A \cdot \left( \Delta U + U_{offset} \right) \tag{3}$$

Für den digitalisierten Wert N am Ausgang des ADC 5 ergibt sich somit:

$$N = N_{max} \cdot \frac{A \cdot \left( \Delta U + U_{offset} \right)}{U_{ref}} \tag{4}$$

Dabei ist $N_{max}$ der maximale Ausgangswert des ADC 5 und $U_{ref}$ die Referenzspannung. Mit Gleichung (1) und (2) erhält man:

$$N = N_{max} \cdot \frac{A \cdot \left( \dfrac{U_{ref}}{R_I} R \cdot k\varepsilon + U_{offset} \right)}{U_{ref}} \tag{5}$$

Über Schalter kann die erste Spannungsreferenz 6 durch eine zweite Spannungsreferenz 7 ersetzt werden. So kann die Stromquelle 3 in zwei verschiedenen Arbeitspunkten $I_1$ und $I_2$ gemäß Gleichung (2) betrieben werden. Aus zwei Messungen $N_1$ und $N_2$ mit jeweils der ersten und der zweiten Spannungsreferenz kann die Offset-Spannung ermittelt werden zu:

$$U_{offset} = \frac{N_1 - N_2}{A \cdot N_{max}} \cdot \frac{U_{ref,1} \cdot U_{ref,2}}{U_{ref,2} - U_{ref,1}} \qquad (6)$$

Damit ergibt sich die Elongation ε aus diesen beiden Messungen zu:

$$\varepsilon = \frac{R_I}{2 \cdot A \cdot N_{max} \cdot R \cdot k} \left( N_1 + N_2 - [N_1 - N_2] \cdot \frac{U_{ref,1} + U_{ref,2}}{U_{ref,2} - U_{ref,1}} \right) \qquad (7)$$

Die Werte der Referenzspannungen lassen sich über einen Faktor B wie folgt in Beziehung setzen:

$$U_{ref,2} = B \cdot U_{ref,1} \qquad (8)$$

Damit vereinfacht sich Gleichung (7) zu:

$$\varepsilon = \frac{R_I}{2 \cdot A \cdot N_{max} \cdot R \cdot k} \left( N_1 + N_2 + [N_1 - N_2] \cdot \frac{1+B}{1-B} \right) \qquad (9)$$

Durch geeignete Wahl von B, z.B. B=3/4, vereinfacht sich der Ausdruck weiter zu:

$$\varepsilon = \frac{R_I}{2 \cdot A \cdot N_{max} \cdot R \cdot k} (8 \cdot N_1 - 6 \cdot N_2) \qquad (10)$$

Das gemessene Gewicht ergibt sich aus der Elongation über eine Kalibrierung, so dass der Quotient in Gleichung (10) durch einen Kalibrierfaktor ersetzt werden kann. Somit lassen sich die Operation und die Schalterstellung an den Spannungsreferenzen 6, 7 leicht mit einem einfachen Rechenwerk 8 ausführen und gegebenenfalls zur Anzeige bringen.

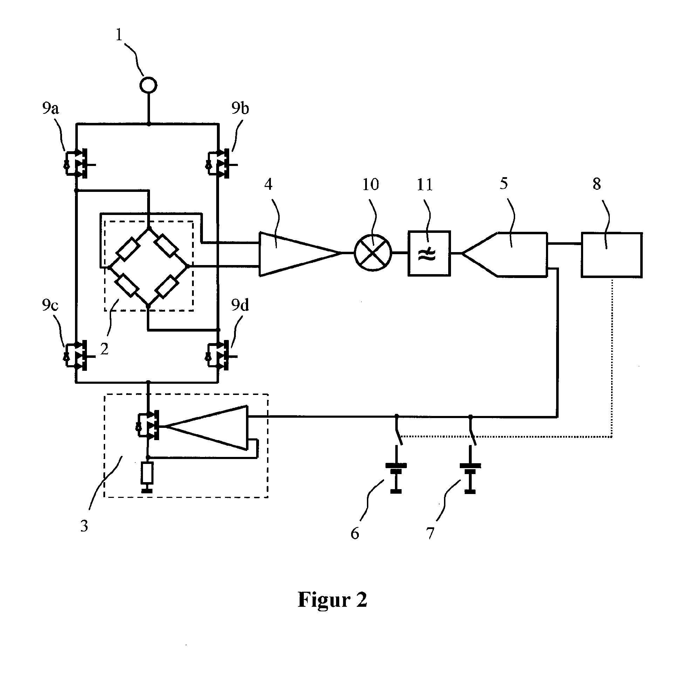

Die Offset-Spannung kann beim Einsatz von Nicht-Präzisions-Differenzverstärkern die Spannung im Nullzweig der Brückenschaltung deutlich übertreffen. Daher kann es notwendig sein, den ADC 5 in seiner Auflösung deutlich höher auswählen zu müssen als es die gewünschte Auflösung der Waage benötigen würde. In einer vorteilhaften Weiterbildung der Erfindung, die in Figur 2 schematisch gezeigt ist, wird zusätzlich die Offset-Spannung des Differenzverstärkers 4 mit einem Trägerfrequenzverfahren reduziert.

Dazu wird der Strom mit einer H-Brücke bestehend aus den elektronischen Schaltern 9a bis 9d in seiner Flussrichtung durch das DMS 2 moduliert. Das durch die DMS-Brückenauslenkung amplitudenmodulierte Wechselspannungsdifferenzsignal wird im Differenzverstärker 4 verstärkt und in einem Demodulator 10 demoduliert. Die Demodulation wirkt wie ein schmalbandiger Bandpass, der nur die Anregungsfrequenz durchlässt. Anschließend wird diese durch einen Tiefpass 11 ausgefiltert, so dass am Ausgang eine Gleichspannung anliegt, die zu der DMS-Auslenkung proportional ist. Offset-Spannungen im Demodulator 10, ADC 5 oder innerhalb der Stromquelle 3 lassen sich so allerdings nicht reduzieren. Diese werden durch die Variation des Arbeitspunkts der Stromquelle 3 und die folgende Auswertung im Rechenwerk 8 reduziert.

Ein einfacher Mikrocontroller ist gut geeignet, um das Rechenwerk 8 zu realisieren. Oft verfügen selbst einfache Mikrocontroller über einen ADC 5. Dieser hat allerdings meistens nicht die für die Applikation benötigte Auflösung. Mit Oversampling-Techniken kann die Auflösung zumeist zu Lasten der Messfrequenz ausreichend erhöht werden. Die reduzierte Messfrequenz ist bei den meisten Waagenapplikationen zu verschmerzen.

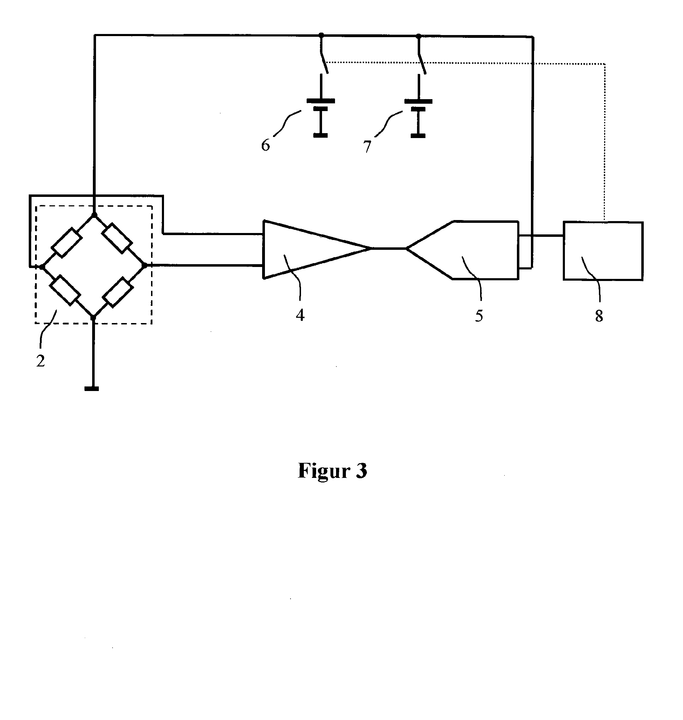

In einer Abwandlung der Erfindung können, wie in Figur 3 dargestellt, die Referenzspannungen 6 und 7 auch direkt an den DMS 2 angelegt werden. Bei der Verwendung von mehreren Wägezellen werden die jeweiligen DMS 2 nun aber parallel geschaltet. Die Offset-Spannung des Differenzverstärkers 4 kann auch hier, wie oben beschrieben, mit einem Trägerfrequenzverfahren reduziert werden. Allerdings muss bei der Ansteuerung der H-Brücke (vergleiche Figur 2) eine Totzeit zwischen den beiden Zuständen mit unterschiedlicher Stromrichtung durch das DMS 2 eingehalten werden, damit z.B. die Schalter 9a und 9c nicht gleichzeitig geschaltet sind, was zu einem überhöhten Stromfluss in der Brücke führen würde. Dieser erhöhte Stromfluss wird in der Konfiguration gemäß Figur 2 durch die Stromquelle 3 verhindert. Diese Totzeit zwischen den beiden Zuständen führt zu Asymmetrien im Demodulator 10.

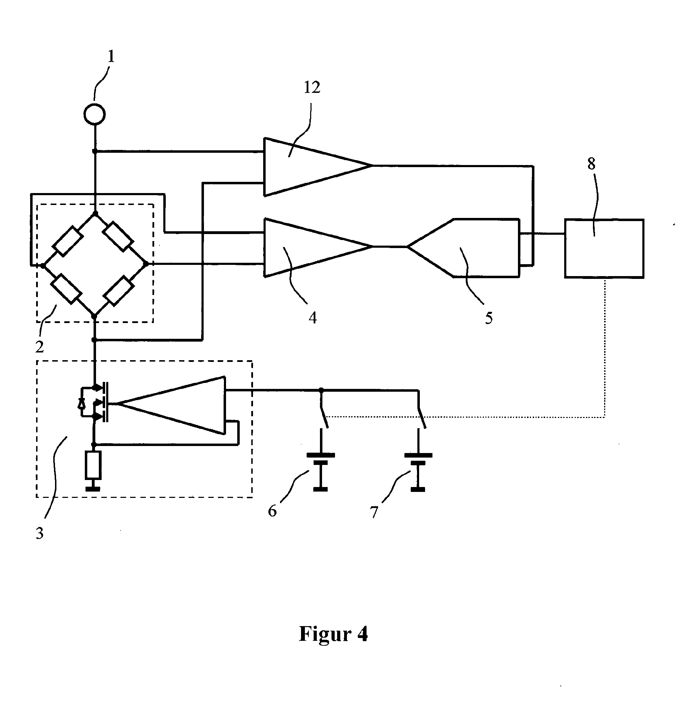

Die bisherigen Ausführungsbeispiele der Erfindung nutzen nicht direkt den in Gleichung (1) beschriebenen Zusammenhang zwischen der Elongation $\varepsilon$ und der relativen Widerstandsänderung $\Delta R/R$. Sie setzen vielmehr ein ohmsches Verhalten des DMS 2 voraus und nutzen die über das Ohmsche Gesetz abgeleitete Form $\Delta U/U$. Bei DMS 2 mit Widerstandsdraht ist diese Annahme im linearen Bereich des DMS 2 sicherlich korrekt. DMS 2 in Dickschichttechnik zeigen zumeist kein ohmsches Verhalten. Die in Figur 4 schematisch gezeigte Weiterbildung der Erfindung beruht auf der direkten Nutzung von Gleichung (1), indem der Strom durch den DMS 2 von einer Stromquelle 3 entsprechend der jeweils geschalteten Spannungsreferenz 6 oder 7 geregelt und die Referenzspannung für den ADC 5 mittels Differenzverstärker 12 aus dem Spannungsabfall über dem DMS 2 abgeleitet wird. Somit wird die Referenzspannung des ADC 5 direkt aus den beiden durch die jeweilige Spannungsreferenz bestimmten Arbeitspunkten des DMS 2 abgeleitet.

## Patentansprüche

1. Vorrichtung zur Signalauswertung von Wägezellen mit mindestens einem in eine Brückenschaltung geschalteten Dehnmessstreifen (2), mindestens einem Differenzverstärker (4) zur Verstärkung einer im Nullzweig der Brückenschaltung anliegenden Spannung ($\Delta U$), sowie einem Analog/Digital-Umsetzer (5) zur Erzeugung eines digitalisierten Wertes (N) der verstärkten Spannung ($\Delta U$), **gekennzeichnet durch** eine erste und eine zweite Referenzspannungsquelle (6, 7) zur Erzeugung einer ersten bzw. einer zweiten Referenzspannung ($U_{ref1}$, $U_{ref2}$) zum Betreiben des Dehnmessstreifens (2) an zwei verschiedenen Arbeitspunkten sowie zum Ableiten einer Referenz für den Analog/Digital-Umsetzer (5) aus der jeweils gleichen Referenzspannung ($U_{ref1}$, $U_{ref2}$), sowie einem Rechenwerk (8), dem die mit den beiden Referenzspannungen ($U_{ref1}$, $U_{ref2}$) ermittelten und digitalisierten Werte (N1, N2) zugeführt werden, wobei sich ein zu messendes Gewicht **durch** Berechnung der Elongation ($\varepsilon$) des Dehnmessstreifens gemäß folgender Formel:

$$\varepsilon = \frac{R_I}{2 \cdot A \cdot N_{max} \cdot R \cdot k}\left(N_1 + N_2 - [N_1 - N_2]\cdot\frac{U_{ref,1} + U_{ref,2}}{U_{ref,2} - U_{ref,1}}\right)$$

und Ermittlung des Quotienten $\dfrac{R_I}{2 \cdot A \cdot N_{max} \cdot R \cdot k}$ durch Kalibrierung ergibt.

2. Vorrichtung nach Anspruch 1, mit einem Verstärker, mit dem eine Betriebsspannung des Dehnmessstreifens (2) an den beiden Arbeitspunkten linear aus der jeweiligen ersten bzw. zweiten Referenzspannung ($U_{ref1}$, $U_{ref2}$) abgeleitet wird.

3. Vorrichtung nach Anspruch 1, mit einer Stromquelle (3), mit der ein Strom (I) durch den Dehnmessstreifen (2) linear aus der jeweiligen ersten bzw. zweiten Referenzspannung ($U_{ref1}$, $U_{ref2}$) ableitet wird.

4. Vorrichtung nach Anspruch 3, bei der der Strom (I) durch den Dehnmessstreifen (2) mit einer H-Brücke bestehend aus vier elektronischen Schaltern (9a, 9b, 9c, 9d) in seiner Flussrichtung moduliert wird und das durch die Auslenkung amplitudenmodulierte Wechselspannungsdifferenzsignal des Dehnmessstreifens (2) in dem Differenzverstärker (4) verstärkt, in einem Demodulator (10) demoduliert und mit einem Tiefpass (11) gefiltert wird, bevor es dem Analog/Digital-Umsetzer (5) zur Erzeugung des digitalisierten Wertes (N1, N2) zugeführt wird.

5. Vorrichtung nach Anspruch 3, bei der die Referenz für den Analog/Digital-Umsetzer (5) mittels eines weiteren Differenzverstärkers (12) aus dem Spannungsabfall ($\Delta U$) über dem Dehnmessstreifen (2) abgeleitet wird.

6. Vorrichtung nach Anspruch 3, 4 oder 5, bei der die verstärkten Signale mehrerer Dehnmessstreifen (2), die sich in einer Reihenschaltung im Strompfad der Stromquelle (3) befinden, mit einem Summierverstärker addiert werden, so dass das Summensignal im Analog/Digital-Umsetzer (5) digitalisiert wird.

7. Vorrichtung nach Anspruch 1 bis 6, bei der das Rechenwerk (8) mit einem Mikrokontroller realisiert ist.

8. Vorrichtung nach Anspruch 7, bei der der Analog/Digital-Umsetzer (5) im Mikrokontroller integriert ist.

9. Verfahren zur Signalauswertung von Wägezellen mit mindestens einem in eine Brückenschaltung geschalteten Dehnmessstreifen (2), mindestens einem Differenzverstärker (4) zur Verstärkung einer im Nullzweig der Brückenschaltung anliegenden Spannung (ΔU), sowie einem Analog/Digital-Umsetzer (5) zur Erzeugung eines digitalisierten Wertes (N) der verstärkten Spannung (ΔU), **dadurch gekennzeichnet, dass** ein Gewicht mit zwei aufeinander folgenden Messungen ermittelt wird, bei denen der Dehnmessstreifen (2) an zwei unterschiedlichen, durch jeweils eine erste bzw. eine zweite Referenzspannung ($U_{ref1}$, $U_{ref2}$) bestimmten Arbeitspunkten betrieben wird, wobei die Referenz für den Analog/DigitalUmsetzer (5) aus der jeweils gleichen Referenzspannung ($U_{ref1}$, $U_{ref2}$) abgeleitet wird, die auch den jeweiligen Arbeitspunkt des Dehnmessstreifens (2) bestimmt, und aus den beiden digitalisierten Werten (N1, N2) in einem Rechenwerk (8) das Gewicht durch Berechnung der Elongation (ε) des Dehnmessstreifens gemäß folgender Formel :

$$\varepsilon = \frac{R_I}{2 \cdot A \cdot N_{max} \cdot R \cdot k} \left( N_1 + N_2 - [N_1 - N_2] \cdot \frac{U_{ref,1} + U_{ref,2}}{U_{ref,2} - U_{ref,1}} \right)$$

und Ermittlung des Quotienten $\dfrac{R_I}{2 \cdot A \cdot N_{max} \cdot R \cdot k}$ durch Kalibrierung bestimmt wird.

**Claims**

1. A device for signal evaluation of load cells with at least one strain gauge (2) connected in a bridge circuit, with at least one differential amplifier (4) for amplifying a voltage (ΔU) applied across the null branch of the bridge circuit, and with an analogue/digital converter (5) for generating a digitalised value (N) of the amplified voltage (ΔU), **characterized by** a first and a second reference voltage source (6, 7) for generating a first or a second reference voltage ($U_{ref1}$, $U_{ref2}$) respectively for operating the strain gauge (2) at two different operating points, and also for deriving a reference for the analogue/digital converter (5) from the respective constant reference voltage ($U_{ref1}$, $U_{ref2}$), and by an arithmetic unit (8) to which the values (N1, N2) are fed, having been determined with the two reference voltages ($U_{ref1}$, $U_{ref2}$) and digitalised, wherein a load to be measured is given by calculating the elongation (ε) according to the following formula:

$$\varepsilon = \frac{R_I}{2 \cdot A \cdot N_{max} \cdot R \cdot k} \left( N_1 + N_2 - [N_1 - N_2] \cdot \frac{U_{ref,1} + U_{ref,2}}{U_{ref,2} - U_{ref,1}} \right)$$

and determining the quotient $\dfrac{R_I}{2 \cdot A \cdot N_{max} \cdot R \cdot k}$ by calibration.

2. The device according to claim 1, having an amplifier with which an operating voltage of the strain gauge (2) at both of the operating points is derived linearly from the respective first or second reference voltage ($U_{ref1}$, $U_{ref2}$).

3. The device according to claim 1, having a current source (3) with which a current (I) through the strain gauge (2) is derived linearly from the respective first or second reference voltage ($U_{ref1}$, $U_{ref2}$).

6

4. The device according to claim 3, in which the current (I) through the strain gauge (2) is modulated in its direction of flow with an H-bridge consisting of four electronic switches (9a, 9b, 9c, 9d), and the AC voltage difference signal of the strain gauge (2), which is amplitude-modulated by the deflection, is amplified in the differential amplifier (4), demodulated in a demodulator (10) and filtered with a low-pass (11), before being fed to the analogue/digital converter (5) to generate the digitalised value (N1, N2).

5. The device according to claim 3, in which the reference for the analogue/digital converter (5) is derived from the voltage drop ($\Delta U$) across the strain gauge (2) by means of a further differential amplifier (12).

6. The device according to claim 3, 4 or 5, in which the amplified signals from a plurality of strain gauges (2), which are connected in series in the current path of the current source (3), are added with a summing amplifier, so that the summed signal is digitalised in the analogue/digital converter (5).

7. The device according to claim 1 to 6, in which the arithmetic unit (8) is realised with a microcontroller.

8. The device according to claim 7, in which the analogue/digital converter (5) is integrated in the microcontroller.

9. A method for signal evaluation of load cells with at least one strain gauge (2) connected in a bridge circuit, with at least one differential amplifier (4) for amplifying a voltage ($\Delta U$) applied across the null branch of the bridge circuit, and with an analogue/digital converter (5) for generating a digitalised value (N) of the amplified voltage ($\Delta U$), **characterized in that** a load is determined with two successive measurements, in which the strain gauge (2) is operated at two different operating points, defined in each case by a first or a second reference voltage ($U_{ref1}$, $U_{ref2}$), wherein the reference for the analogue/digital converter (5) is derived from the respective constant reference voltage ($U_{ref1}$, $U_{ref2}$), which also defines the respective operating point of the strain gauge (2), and from the two digitalised values (N1, N2), in an arithmetic unit (8), the load is determined by calculating the elongation ($\varepsilon$) according to the following formula:

$$\varepsilon = \frac{R_I}{2 \cdot A \cdot N_{\max} \cdot R \cdot k}\left(N_1 + N_2 - [N_1 - N_2] \cdot \frac{U_{ref,1} + U_{ref,2}}{U_{ref,2} - U_{ref,1}}\right)$$

and the quotient $\dfrac{R_I}{2 \cdot A \cdot N_{\max} \cdot R \cdot k}$ is determined by calibration.

**Revendications**

1. Dispositif pour l'évaluation de signaux de cellules de pesage avec au moins un extensomètre à résistance (2) monté dans un circuit en pont, au moins un amplificateur différentiel (4) pour l'amplification d'une tension (AU) appliquée dans la branche nulle du circuit en pont, ainsi qu'un convertisseur analogique/numérique (5) pour la génération d'une valeur numérisée (N) de la tension amplifiée (AU), **caractérisé par** une première et une seconde source de tension de référence (6, 7) pour la génération d'une première ou d'une seconde tension de référence ($U_{ref1}$, $U_{ref2}$) pour l'exploitation de l'extensomètre à résistance (2) au niveau de deux points de fonctionnement dynamique différents ainsi que pour déduire, à partir de la tension de référence respectivement identique ($U_{ref1}$, $U_{ref2}$), une référence pour le convertisseur analogique/numérique (5) ainsi qu'avec une unité de calcul (8) à laquelle sont amenées les deux valeurs déterminées et numérisées (N1, N2) avec les deux tensions de référence ($U_{ref1}$, $U_{ref2}$), moyennant quoi un poids à mesurer résulte du calcul de l'élongation ($\varepsilon$) de l'extensomètre à résistance conformément à la formule suivante:

$$\varepsilon = \frac{R_I}{2 \cdot A \cdot N_{\max} \cdot R \cdot k}\left(N_1 + N_2 - [N_1 - N_2] \cdot \frac{U_{ref,1} + U_{ref,2}}{U_{ref,2} - U_{ref,1}}\right)$$

et de la détermination du quotient $\dfrac{R_I}{2 \cdot A \cdot N_{\max} \cdot R \cdot k}$ par calibration.

2. Dispositif selon la revendication 1, avec un amplificateur, avec lequel on déduit de manière linéaire, à partir de la première ou seconde tension de référence ($U_{ref1}$, $U_{ref2}$) respective, une tension de fonctionnement de l'extensomètre à résistance (2) au niveau des deux points de fonctionnement dynamique.

3. Dispositif selon la revendication 1, avec une source de courant (3), avec lequel un courant (I) à travers l'extensomètre à résistance (2) est déduit linéairement à partir de la première ou seconde tension de référence ($U_{ref1}$, $U_{ref2}$) respective.

4. Dispositif selon la revendication 3, dans lequel on module le courant (I) à travers l'extensomètre à résistance (2) avec un pont H se composant de quatre commutateurs électroniques (9a, 9b, 9c, 9d) dans la direction de circulation de celui-ci, et le signal différentiel de tension alternative de l'extensomètre à résistance (2) modulé en amplitude par l'excursion étant amplifié dans l'amplificateur différentiel (4), démodulé dans un démodulateur (10) et étant filtré avec un passe-bas (11) avant de l'amener au convertisseur analogique/numérique (5) pour la génération de la valeur numérisée (N1, N2).

5. Dispositif selon la revendication 3, dans lequel on déduit, à partir de la chute de tension (AU) dans l'extensomètre à résistance (2), la référence pour le convertisseur analogique/numérique (5) à l'aide d'un autre amplificateur différentiel (12).

6. Dispositif selon la revendication 3, 4 ou 5, dans lequel les signaux amplifiés de plusieurs extensomètres à résistance (2), lesquels se trouvent dans un montage en série dans le trajet de courant de la source de courant (3), sont additionnés avec un amplificateur additif de sorte que le signal de la somme est numérisé dans le convertisseur analogique/numérique (5).

7. Dispositif selon les revendications 1 à 6, dans lequel l'unité de calcul (8) est réalisée par un microcontrôleur.

8. Dispositif selon la revendication 7, dans lequel le convertisseur analogique/numérique (5) est intégré dans le microcontrôleur.

9. Procédé pour l'évaluation de signaux de cellules de pesage avec au moins un extensomètre à résistance (2) monté dans un circuit en pont, au moins un amplificateur différentiel (4) pour l'amplification d'une tension (AU) appliquée dans la branche nulle du circuit en pont, ainsi qu'un convertisseur analogique/numérique (5) pour la génération d'une valeur numérisée (N) de la tension amplifiée (AU), **caractérisé en ce que** l'on détermine un poids grâce à deux mesures successives lors desquelles on fait fonctionner l'extensomètre à résistance (2) au niveau de deux points de fonctionnement dynamique différents respectivement déterminés par une première ou une seconde tension de référence ($U_{ref1}$, $U_{ref2}$), la référence pour le convertisseur analogique/numérique (5) étant déduite à partir de la tension de référence ($U_{ref1}$, $U_{ref2}$) respectivement identique, laquelle détermine également le point de fonctionnement dynamique respectif de l'extensomètre à résistance (2), et à partir des deux valeurs (N1, N2) numérisées, dans une unité de calcul (8), le poids étant déterminé grâce au calcul de l'élongation ($\varepsilon$) de l'extensomètre à résistance selon la formule suivante :

$$\varepsilon = \frac{R_I}{2 \cdot A \cdot N_{\max} \cdot R \cdot k}\left( N_1 + N_2 - [N_1 - N_2] \cdot \frac{U_{ref,1} + U_{ref,2}}{U_{ref,2} - U_{ref,1}} \right)$$

et à la détermination du quotient $\dfrac{R_I}{2 \cdot A \cdot N_{\max} \cdot R \cdot k}$ par calibration.

**Figur 1**

**Figur 2**

**Figur 3**

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3538178 A1
- DE 10135238 A1
- DE 102008014838 B3
- DE 19838371 C2
- DE 20023524 U1
- US 4763739 A
- GB 1478156 A